# EUROPEAN PATENT APPLICATION

(11) **EP 0 673 798 A1**
(43) Date of publication of application: **27.09.1995**
(21) Application number: 95100541.2
(22) Date of filing: 17.01.1995
(51) Int. Cl.: B60K 7/00, H02K 7/14, B60T 1/06, B60B 19/10, B62D 17/00

(54) **A drive unit for electric vehicles**

(30) Priority: 25.03.1994 IT TO940224
(71) Applicant: Fioravanti S.r.l., I-10121 Torino (IT)
(72) Inventor: Fioravanti, Leonardo, I-10024 Moncalieri, Torino (IT); Valentini, Giorgio, I-20135 Milano (IT)
(74) Representative: Jacobacci, Filippo

(57) **Abstract**

In a drive unit for electric vehicles, each wheel (3) of the vehicle is driven by its own electric motor (1), by means of a drive shaft (2). Each electric motor (1) is hollow and houses, within a central axial cavity (4) in the rotor (1b), a joint (G) for transmitting the drive to the drive shaft (2) of the wheel (3).

## Description

The present invention relates to a drive unit for electric vehicles in which each wheel of the vehicle is driven by its own electric motor, by means of a drive shaft.

The main object of the invention is to provide a very compact drive unit which, in particular, has very small transverse dimensions.

This object is achieved by virtue of the characteristic which forms the subject of Claim 1.

Further advantageous characteristics of the invention form the subjects of Claims 2 to 10.

The invention will now be described with reference to the appended drawings, provided purely by way of non-limiting example, in which:
Figure 1 is a partially-sectioned, schematic, elevational view of a drive unit according to the present invention,
Figure 2 is an exploded, perspective view of a detail of Figure 1,
Figure 3 is a perspective view of another detail of Figure 1,
Figure 4 is a schematic side view taken on the arrow IV of Figure 1, and
Figure 5 is a cross-section taken on the line V-V of Figure 4, on an enlarged scale.

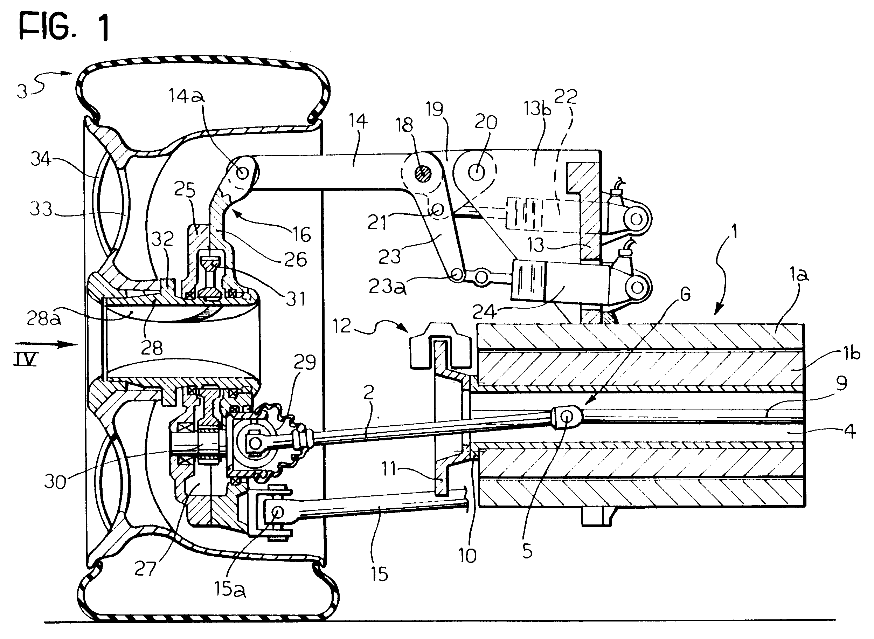

In Figure 1, an electric motor, indicated 1, drives a steerable wheel 3 of a motor vehicle by means of a drive shaft 2, each wheel of the vehicle being driven by a drive unit of the type shown in Figure 1. In the embodiment illustrated, the wheel 3 is steered by an electrically servo-assisted rack 35, only the end portion of which is shown.

The electric motor 1 is driven by an energy source, not shown, preferably constituted by an electric generator driven by a combustion engine, for example, such as a gas turbine.

In the embodiment illustrated, the electric motor 1 is disposed below the axis of rotation of the wheel 3 so as to help to lower the centre of gravity of the vehicle. Naturally, the motor could be located in other positions, according to requirements.

The electric motor 1 comprises a stator 1a and a rotor 1b. The rotor 1b has a central axial cavity 4 which houses a joint G for transmitting the drive to the shaft 2 for driving the wheel 3.

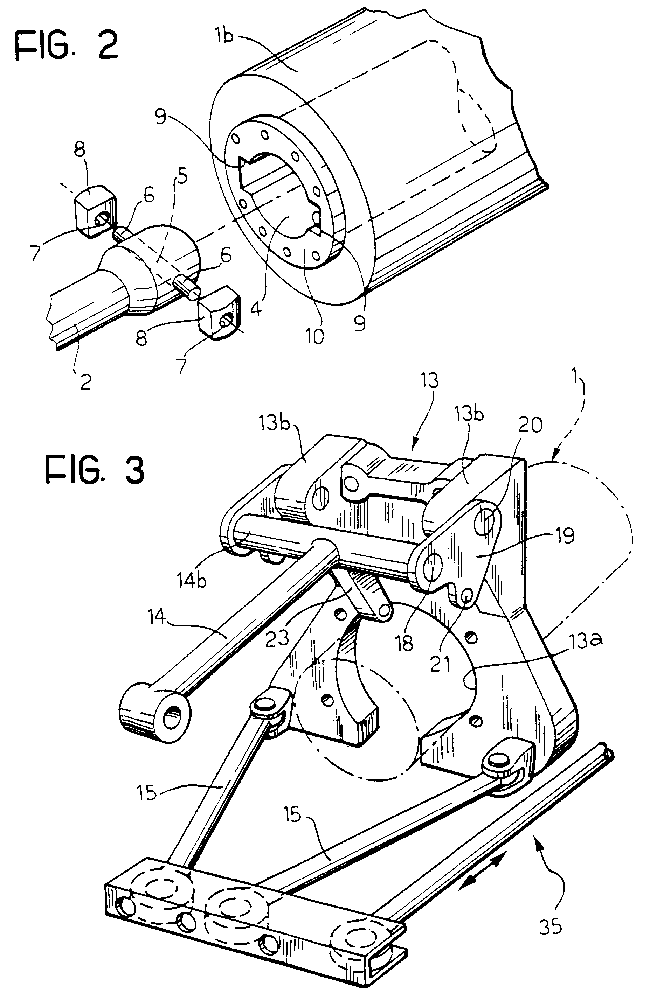

The joint G is of a known type for permitting axial displacements of the driven member. In the embodiment shown schematically in Figure 2, the joint G comprises a transverse pin 5 carried by the inner end of the drive shaft 2 and having two projecting ends 6 which are mounted rotatably in corresponding holes 7 in two substantially parallelepipedal bearings 8 mounted for sliding in two diametrally opposed grooves 9 formed in the thickness of the internal wall of the cavity 4 in the rotor.

The positioning of the joint G inside the cavity 4 of the hollow rotor 1b reduces the transverse dimensions of the drive unit which is therefore very compact.

The rotor 1b of the electric motor 1 has, at its end facing the wheel, a projecting annular flange 10 to which the hub of the disc 11 of a disc brake, generally indicated 12, is fixed. This solution permits the use of disc brakes with small radial dimensions.

The electric motor 1 extends through the lower opening 13a in a support element 13 which is intended to be fixed to the load-bearing structure of the vehicle, not shown in the drawings.

The inner ends of the upper and lower arms 14, 15 of an articulated quadrilateral suspension unit are articulated to the support element 13. The inner ends of the arms 14 and 15 are articulated to the upright carrier 16 of the wheel 3 on respective pins 14a and 15a.

The upper arm 14 is T-shaped and has a cross-member 14b which is articulated at each of its two ends to two substantially triangular plates 19, by means of pins 18. Each plate 19 is articulated by means of a pin 20 to a bracket 13b of the support element 13.

The end of a device 22 for the active control of the camber of the wheel 3 is also articulated to each plate 19 about a pin 21.

The upper arm 14 also carries a downwardly-inclined central appendage 23 on which the end of a device 24 for controlling jolting of the suspension, which is active with regard to springing, damping and the height from the ground, is articulated about a pin 23a.

Conveniently, the two active control devices 22 and 24 form parts of a system for automatically optimizing the behaviour of the vehicle, on the basis of the detection of the imprints of the tyres, in accordance with the Applicant's European patent No. 0 444 109.

The upright 16 of the wheel is constituted by two releasably interconnected elements 25, 26 between which there is defined a chamber 27, which houses reduction gearing interposed between the drive shaft 2 and a hollow hub 28 of the wheel, which is supported for rotation in the upright 16.

The cavity of the hub 28 preferably has helical fins 28a for ventilation purposes.

The reduction gearing comprises a pinion 30 which receives the drive from the drive shaft 2, by means of a constant-velocity universal joint 29, and meshes with a gear 31 keyed to the external surface of the hollow wheel hub 28.

The external surface of the hollow hub 28 of the wheel 3 has a central flange 32 to which the wheel 3 is fixed.

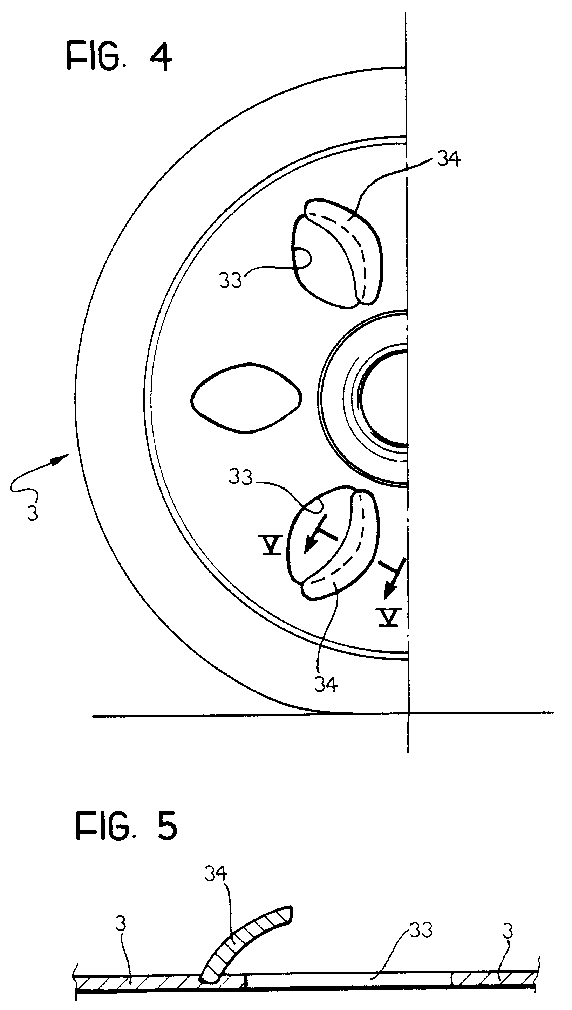

As shown in Figures 4 and 5, the wheel 3 has ventilation holes 33 and a ventilation vane 34 is fixed to the wheel adjacent each hole 33, after the formation of the wheel, for example, by moulding or diecasting.

The vane 34 may be fixed to the wheel 3, for example, by gluing.

The fact that the vane is fitted on the wheel after the manufacture thereof, enables the vanes of each wheel to be oriented so as to achieve the same ventilation characteristics in the wheels situated on the two sides of the vehicle.

In particular, the upper portion of Figure 4 shows a vane 34 fitted on a wheel intended for use on the right-hand side of the vehicle and the lower portion of Figure 4 shows a vane fitted on a wheel intended for use on the left-hand side of the vehicle.

This characteristic provides wheels having an effective ventilation effect which is identical on the two sides of the vehicle, without using two different moulds, one for the wheels on the left-hand side and one for the wheels on the right-hand side.

## Claims

1. A drive unit for electric vehicles, in which each wheel of the vehicle (3) is driven by its own electric motor (1), by means of a drive shaft (2), characterized in that each electric motor (1) is hollow and houses, within a central axial cavity (4) in the rotor (1b), a joint (G) for transmitting the drive to the drive shaft (2) of the wheel (3).

2. A drive unit according to Claim 1, characterized in that the disc (10) of a disc brake (11) is fixed to the rotor (1b) of the electric motor (1).

3. A drive unit according to Claim 2, characterized in that the end of the rotor (1b) of the electric motor (1) which faces the wheel (3) has a projecting annular flange (10) to which a hub of the said disc (11) is fixed.

4. A drive unit according to Claim 1, characterized in that the electric motor extends through a support element (13) to which the inner ends of the two arms, that is, an upper arm (14) and a lower arm (15), of an articulated quadrilateral suspension unit are articulated, the outer ends of the arms (14, 15) being articulated to the upright (16) carrier of the wheel (3).

5. A drive unit according to Claim 4, characterized in that the suspension unit has active control both with regard to jolting and with regard to wheel camber.

6. A drive unit according to Claim 4, characterized in that the upright (16) of the wheel (3) is constituted by two releasably interconnected portions (25, 26) between which there is defined a chamber (27) which houses reduction gearing (30, 31) interposed between the drive shaft (2) and a hollow hub (28) of the wheel (3) which is supported for rotating in the upright (16).

7. A drive unit according to Claim 6, characterized in that the inner end of the drive shaft (2) drives, by means of a constant-velocity joint (29), a pinion (30) which meshes with a gear (31) keyed to the external surface of the hollow hub (28) of the wheel (3).

8. A drive unit according to Claims 6 and 7, characterized in that the internal surface of the cavity of the hollow hub (28) has helical fins (28a) for ventilation purposes.

9. A drive unit according to Claims 6 to 8, characterized in that the external surface of the hollow hub (28) of the wheel (3) has a central flange (32) to which the wheel (3) is fixed.

10. A drive unit according to Claim 7, characterized in that the wheel has ventilation holes (33) and in that a ventilation vane (34) is fixed adjacent each hole (33) after the manufacture of the wheel, and is oriented so as to achieve the same ventilation characteristics in the wheels situated on the two sides of the vehicle.
